# EUROPEAN PATENT APPLICATION

(11) **EP 4 227 144 A1**
(43) Date of publication of application: **16.08.2023**
(21) Application number: 20956666.0
(22) Date of filing: 05.10.2020
(51) Int. Cl.: B60L 15/20, B60L 9/18

(54) **CONTROL METHOD AND CONTROL DEVICE FOR ELECTRIC FOUR-WHEEL DRIVE VEHICLE**

(71) Applicant: NISSAN MOTOR CO., LTD., Kanagawa 221-0023 (JP)
(72) Inventor: HIROI, Daisuke, Atsugi-shi, Kanagawa 243-0123 (JP); TAIRA, Masahito, Atsugi-shi, Kanagawa 243-0123 (JP); HASHIMOTO, Kentaro, Atsugi-shi, Kanagawa 243-0123 (JP)
(74) Representative: Hoefer & Partner Patentanwälte mbB
(86) International application number: PCT/JP2020/037768
(87) International publication number: WO 2022/074717

(57) **Abstract**

This is a control method for an electric four-wheel drive vehicle including a front drive source for driving a front wheel and a rear drive source for driving a rear wheel independently of the front wheel. The control method including: acquiring a driving direction of the electric four-wheel drive vehicle based on an input state of a shift lever; acquiring an actual moving direction of the electric four-wheel drive vehicle; and when the driving direction and the moving direction are different from each other, setting a basic driving force for suppressing movement in the moving direction for the front wheel and the rear wheel, and driving one wheel of the front wheel and the rear wheel with a driving force smaller than the basic driving force by implementing a limit for setting an upper limit value for a driving force generated in the one wheel.

## Description

### TECHNICAL FIELD

The present invention relates to a control method and a control device for an electric four-wheel drive vehicle using a motor as a drive source.

### BACKGROUND ART

JP 2005-033866 A describes that when it is determined that a road surface on which a hybrid vehicle including an engine and a motor as drive sources is stopped is an uphill road, a torque corresponding to a road surface gradient is generated by the motor when a brake is released, thereby preventing backward movement of the hybrid vehicle. The hybrid vehicle described in JP 2005-033866 A is a four-wheel drive vehicle, and separate motors are connected to a front wheel and a rear wheel thereof and are controlled by different power drive units.

### SUMMARY OF INVENTION

An electric vehicle including a motor as a drive source can reduce downhill movement (hereinafter, referred to as rollback) due to gravity when starting from a state of being stopped on a slope. Specifically, the electric vehicle can reduce rollback, for example, by generating a torque corresponding to a road surface gradient with a motor by feedback control, or by generating a torque in a forward direction with a motor when rotation in a backward direction of wheels is detected. A case where the vehicle is started from a state of being stopped on a slope includes not only a case where the vehicle (the electric vehicle) is moved forward by releasing a brake pedal and depressing an accelerator pedal, but also a case where the vehicle (the electric vehicle) is moved backward by simply releasing the brake pedal and rolling back. When the electric vehicle is a four-wheel drive vehicle, it is rational that the torque for reducing the rollback is generated using both the front wheel and the rear wheel, as a matter of course.

However, when road surface resistances received by the front wheel and the rear wheel are different, the motor torque for reducing the rollback may normally cause the vehicle to perform an operation that is not assumed by a driver, a passenger, or the like. For example, when the vehicle starts on a slope, it is assumed that a slight rollback occurs. However, in a case where one wheel of the front wheel and the rear wheel is on a road surface having a relatively low resistance, when the motor torque for reducing the rollback is generated as described above, the one wheel on the road surface having a low resistance may not grip the road surface, and may idle in a driving direction (an intended direction of travel). For this reason, the motor torque control for reducing the rollback may give the driver or the like a sense of discomfort about an operation state of the vehicle (hereinafter, simply referred to as a sense of discomfort).

The problem of the sense of discomfort caused by the idling of some of the wheels does not occur in a conventional four-wheel drive vehicle in which all of the wheels are driven mechanically in conjunction with each other. Therefore, the sense of discomfort caused by the idling of the wheels as described above is a problem specific to a four-wheel drive vehicle capable of independently controlling some of a plurality of wheels, for example, an electric four-wheel drive vehicle in which the front wheel and the rear wheel are driven by different electric motors.

An object of the present invention is to provide a control method and a control device for an electric four-wheel drive vehicle capable of performing motor torque control for reducing rollback without giving a sense of discomfort to a driver or the like.

One aspect of the present invention is a control method for an electric four-wheel drive vehicle including a front drive source for driving a front wheel and a rear drive source for driving a rear wheel independently of the front wheel. The control method including: acquiring a driving direction of the electric four-wheel drive vehicle based on an input state of a shift lever; acquiring an actual moving direction of the electric four-wheel drive vehicle; and when the driving direction and the moving direction are different from each other, setting a basic driving force for suppressing movement in the moving direction for the front wheel and the rear wheel, and driving one wheel of the front wheel and the rear wheel with a driving force smaller than the basic driving force by implementing a limit for setting an upper limit value for a driving force generated in the one wheel.

### BRIEF DESCRIPTION OF DRAWINGS

[FIG. 1] FIG. 1 is a block diagram illustrating a configuration of an electric four-wheel drive vehicle that executes a control method for the electric four-wheel drive vehicle according to the present embodiment.
[FIG. 2] FIG. 2 is a flowchart illustrating main processing of the control method of the electric four-wheel drive vehicle according to the present embodiment.
[FIG. 3] FIG. 3 is a graph showing an example of an accelerator position (accelerator opening degree)-torque table.
[FIG. 4] FIG. 4 is a block diagram showing a configuration of torque distribution processing.
[FIG. 5] FIG. 5 is a block diagram showing a configuration of second correction processing.
[FIG. 6] FIG. 6 is a map showing an upper limit value set in a torque limit imposed at the time of rollback.
[FIG. 7] FIG. 7 is an explanatory diagram illustrating an example of a situation in which the electric four-wheel drive vehicle may roll back.
[FIG. 8] FIG. 8 is a graph showing changes in rotation speed, torque, and accelerator position of wheels in a comparative example in which the torque limit is not implemented.
[FIG. 9] FIG. 9 is a graph showing changes in rotation speed, torque, and accelerator position of wheels when the torque limit is implemented.
[FIG. 10] FIG. 10 is an explanatory diagram showing a situation in which an operation similar to that during rollback may occur.
[FIG. 11] FIG. 11 is a block diagram illustrating a configuration of second correction processing according to a modification.

### DESCRIPTION OF EMBODIMENTS

Hereinafter, an embodiment of the present invention will be described with reference to the accompanying drawings.

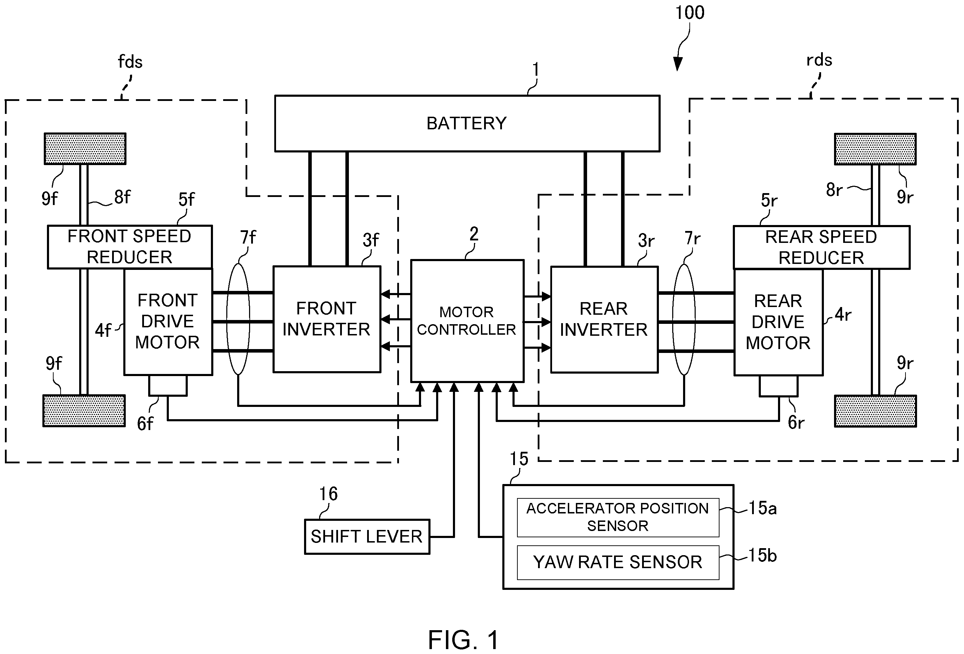

FIG. 1 is a block diagram illustrating a configuration of an electric four-wheel drive vehicle that executes a control method for the electric four-wheel drive vehicle according to the present embodiment.

An electric vehicle refers to a vehicle including an electric motor (hereinafter, simply referred to as a motor) as a drive source and can travel by generating a driving force due to a torque generated by a motor in one or more wheels. For this reason, the electric vehicle includes not only an electric automobile but also a hybrid vehicle using both a motor and an engine as drive sources. For example, the electric vehicle includes a hybrid vehicle in which a motor is used as a drive source of one wheel of a front wheel and a rear wheel and an engine is used as a drive source of the other wheel. A four-wheel drive vehicle refers to a vehicle in which four wheels can be used as drive wheels. For this reason, the four-wheel drive vehicle includes not only the vehicle that always uses four wheels as drive wheels, but also a vehicle that can switch between front-wheel drive and rear-wheel drive. In the four-wheel drive vehicle, some of four wheels can be controlled as drive wheels in conjunction with each other, and the four wheels may be controlled as drive wheels that are independently driven.

Therefore, in the present embodiment, the electric four-wheel drive vehicle refers to a vehicle that can travel by generating a driving force due to a torque generated by a motor in some or all of the four wheels.

As shown in FIG. 1, a vehicle 100 is an electric four-wheel drive vehicle. The vehicle 100 includes a front drive system fds, a rear drive system rds, a battery 1, and a motor controller 2 (a controller).

The front drive system fds is a system that receives supply of electric power from the battery 1 and drives a front wheel 9f under the control of the motor controller 2. Specifically, the front drive system fds includes a front inverter 3f, a front drive motor 4f, a front speed reducer 5f, a front rotation sensor 6f, a front drive shaft 8f, the front wheel 9f, and the like.

The front wheel 9f is a pair of wheels located relatively forward of the vehicle 100 among four wheels of the vehicle 100. A forward direction of the vehicle 100 is a predetermined direction formally determined in accordance with a direction of a passenger seat of a driver or the like. By the front drive system fds, the front wheel 9f function as a drive wheel that generates a driving force of the vehicle 100.

The rear drive system rds is a system that receives supply of electric power from the battery 1 and drives rear wheel 9r under the control of the motor controller 2. Specifically, the rear drive system rds includes a rear inverter 3r, a rear drive motor 4r, a rear speed reducer 5r, a rear rotation sensor 6r, a rear drive shaft 8r, and the rear wheel 9r symmetrically with the front drive system fds.

The rear wheel 9r is a pair of wheels located relatively rearward of the vehicle 100 among the four wheels of the vehicle 100. A rearward direction of the vehicle 100 refers to a direction opposite to the forward direction of the vehicle 100. By the rear drive system rds, the rear wheel 9r functions as a drive wheel that generates a driving force of the vehicle 100.

The battery 1 is connected to a motor via an inverter, and supplies driving power to the motor by discharging. In addition, the battery 1 can be charged by receiving supply of regenerative power from the motor. In the front drive system fds, the battery 1 is connected to the front drive motor 4f via the front inverter 3f. Similarly, in the rear drive system rds, the battery 1 is connected to the rear drive motor 4r via the rear inverter 3r.

The motor controller 2 is a control device of the vehicle 100. The motor controller 2 is, for example, a computer including a central processing unit (CPU), a read-only memory (ROM), a random access memory (RAM), and an input/output interface (I/O interface), and the like. The motor controller 2 generates control signals for controlling the front drive motor 4f and the rear drive motor 4r based on vehicle variables of the vehicle 100. The motor controller 2 controls operations of the front wheel 9f and the rear wheel 9r respectively by controlling the front drive motor 4f and the rear drive motor 4r.

The vehicle variables are information indicating an operation state or a control state of the entire vehicle 100 or each unit for constituting the vehicle 100. The vehicle variables can be acquired by detection, measurement, calculation, or the like. For example, an accelerator position, a range signal of a shift lever, a vehicle speed, a yaw rate, a DC voltage value of the battery 1, a steering angle, a rotor phase of each motor, a three-phase alternating current, an electric angular velocity, a rotation speed, a rotation speed, a wheel speed, and the like are the vehicle variables of the vehicle 100. The motor controller 2 controls the front drive motor 4f and the rear drive motor 4r using, for example, these vehicle variables input as digital signals.

Control signals for controlling the front drive motor 4f and the rear drive motor 4r are, for example, pulse width modulation signals (PWM signals) for controlling currents of these motors. The motor controller 2 generates drive signals of the front inverter 3f and the rear inverter 3r in accordance with the generated PWM signals.

Each of the front inverter 3f and the rear inverter 3r includes, for example, two switching elements (for example, power semiconductor elements such as insulated gate bipolar transistors (IGBTs) or metal-oxide-semiconductor field-effect transistors (MOS-FETs)) corresponding to each phase. Each of these inverters turns on/off the switching element in response to a drive signal generated by the motor controller 2, thereby converting a direct current supplied from the battery 1 into an alternating current and adjusting currents supplied to the front drive motor 4f and the rear drive motor 4r. Further, each inverter inversely converts alternating currents generated by the front drive motor 4f and the rear drive motor 4r by a regenerative braking force into direct currents, and adjusts the currents supplied to the battery 1.

The front drive motor 4f and the rear drive motor 4r are, for example, three-phase AC motors, and generate a driving force (a torque) by an alternating current supplied from a connected inverter. The driving force generated by the front drive motor 4f is transmitted to the front wheel 9f via the front speed reducer 5f and the front drive shaft 8f. Similarly, the driving force generated by the rear drive motor 4r is transmitted to the rear wheel 9r via the rear speed reducer 5r and the rear drive shaft 8r. Further, when the front drive motor 4f and the rear drive motor 4r are rotated along with the front wheel 9f and the rear wheel 9r, respectively, the front drive motor 4f and the rear drive motor 4r generate a regenerative braking force and recover kinetic energy of the vehicle 100 as electric energy. The front drive motor 4f is a drive source (a front drive source) that drives the front wheel 9f. Similarly, the rear drive motor 4r is a drive source (a rear drive source) that drives the rear wheel 9r independently of the front wheel 9f.

Each of the front speed reducer 5f and the rear speed reducer 5r includes, for example, a plurality of gears. Each of these speed reducers reduces a rotation speed of a motor connected thereto and transmits the reduced rotation speed to a drive shaft, thereby generating a driving torque or a braking torque (hereinafter, simply referred to as a torque) proportional to a speed reduction ratio.

Each of the front rotation sensor 6f and the rear rotation sensor 6r detects a rotor phase of a motor connected thereto, and outputs the detected rotor phase to the motor controller 2. The front rotation sensor 6f and the rear rotation sensor 6r are, for example, resolvers or encoders.

Each of a front current sensor 7f and a rear current sensor 7r detects a current flowing through a motor connected thereto, and outputs the detected current to the motor controller 2. In the present embodiment, these current sensors detect three-phase alternating currents of the respective motors. Currents of any two phases may be detected using the front current sensor 7f and the rear current sensor 7r, and a current of the remaining one phase may be acquired by calculation.

The vehicle 100 includes other various sensors 15 in addition to the front rotation sensor 6f and the front current sensor 7f incorporated in the front drive system fds and the rear rotation sensor 6r and the rear current sensor 7r incorporated in the rear drive system rds. The other various sensors 15 include, for example, an accelerator position sensor 15a, an acceleration sensor (not shown), a speed sensor (not shown), a yaw rate sensor 15b, a global positioning system (GPS) sensor (not shown), and/or a steering angle sensor (not shown). The accelerator position sensor 15a detects an accelerator position APO which is an operation amount of an accelerator (not shown). The acceleration sensor detects an acceleration in a longitudinal direction and/or a lateral direction of the vehicle 100. The speed sensor detects a vehicle speed V of the vehicle 100. The vehicle speed V is a moving speed (a vehicle body speed) of an entire vehicle body of the vehicle 100. The yaw rate sensor 15b detects a yaw rate of the vehicle 100. The GPS sensor detects position information of the vehicle 100. The steering angle sensor detects a steering angle of a steering wheel (not shown). Detection values detected by the various sensors 15 are input to the motor controller 2. That is, the motor controller 2 can acquire the detected vehicle variables such as the accelerator position APO, the acceleration in the longitudinal direction, the acceleration in the lateral direction, the yaw rate, the position information, and the steering angle, as necessary.

In addition, the motor controller 2 can freely acquire states of operations or settings of various devices (not shown) included in the vehicle 100 as vehicle variables. For example, the motor controller 2 can acquire an input state from a shift lever 16 for operating a transmission (not shown). In the present embodiment, the vehicle 100 is an automatic transmission, and the shift lever 16 of the vehicle 100 is a selector. Therefore, the motor controller 2 acquires, as the input state of the shift lever 16, a signal (hereinafter, referred to as a range signal) indicating a range of parking ("P"), reverse ("R"), neutral ("N"), drive ("D"), or the like. Accordingly, the motor controller 2 determines a driving direction or the like of the vehicle 100 intended by the driver. For example, when the range signal SFT is in a D range, the motor controller 2 determines that the driving direction of the vehicle 100 intended by the driver is a forward direction, and executes control for driving the vehicle 100 in the forward direction. For this reason, when the range signal SFT is in the D range, the driving direction of the vehicle 100 is the forward direction. When the range signal SFT is in an R range, the motor controller 2 determines that the driving direction of the vehicle 100 intended by the driver is a rearward direction, and executes control for driving the vehicle 100 in the rearward direction. For this reason, when the range signal SFT is in the R range, the driving direction of the vehicle 100 is the rearward direction.

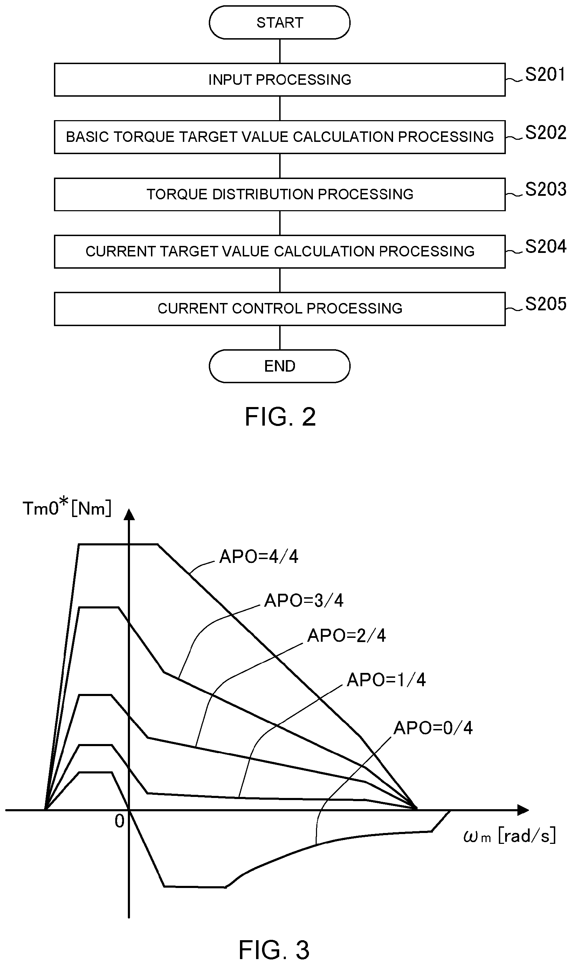

FIG. 2 is a flowchart illustrating main processing of the control method of the electric four-wheel drive vehicle according to the present embodiment. As shown in FIG. 2, the motor controller 2 executes input processing S201, basic torque target value calculation processing S202, torque distribution processing S203, current target value calculation processing S204, and current control processing S205. The motor controller 2 is programmed to execute these processing at predetermined calculation intervals.

### 1. Input Processing

The input processing S201 is processing in which the motor controller 2 acquires vehicle variables by receiving inputs from the various sensors 15 and the like. Among parameters used in the subsequent processing, parameters that cannot be directly obtained as the vehicle variables are acquired by the motor controller 2 through calculation or the like using the vehicle variables in the input processing S201.

In the present embodiment, the motor controller 2 acquires an accelerator position APO [%], a rotor phase [rad] and a three-phase alternating current [A] of each motor, the range signal SFT of the shift lever 16, a vehicle speed V [km/h], a yaw rate YR [deg/sec], and a DC voltage value Vdc [V] of the battery 1 from the various sensors 15 and the like. In particular, the motor controller 2 acquires the driving direction of the vehicle 100 based on the range signal SFT indicating the input state of the shift lever 16.

In the input processing S201, the motor controller 2 acquires a motor electric angular velocity ωe [rad/s], a motor rotation speed ωm [rad/s], a motor rotation speed Nm [rpm], and a wheel speed ωw [km/h] by calculation as follows.

### (1) Motor Electric Angular Velocity ωe

The motor controller 2 acquires each motor electric angular velocity ωe by differentiating a rotor phase α with respect to time. That is, the motor controller 2 acquires a front motor electric angular velocity ωef by differentiating a rotor phase of of the front drive motor 4f. The motor controller 2 acquires a rear motor electric angular velocity ωer by differentiating a rotor phase or of the rear drive motor 4r.

### (2) Motor Rotation Speed ωm

The motor controller 2 divides the motor electric angular velocity ωe by the number of pole pairs of the motor to calculate a motor rotation speed ωm which is a mechanical angular velocity. That is, the motor controller 2 calculates a front motor rotation speed ωmf by dividing the front motor electric angular velocity ωef by the number of pole pairs of the front drive motor 4f. Similarly, the motor controller 2 calculates a rear motor rotation speed ωmr by dividing the rear motor electric angular velocity ωer by the number of pole pairs of the rear drive motor 4r.

Further, the motor controller 2 acquires an actual moving direction of the vehicle 100 depending on whether the calculated front motor rotation speed ωmf and/or rear motor rotation speed ωmr is positive or negative. The actual moving direction refers to a direction in which the vehicle 100 actually moves regardless of the input state of the shift lever 16 or the like. For example, in a case where the vehicle 100 actually rolls back toward a downhill direction even when the forward direction of the vehicle 100 is directed toward an uphill direction and the input state of the shift lever 16 is the D range, the actual moving direction is the downhill direction, that is, the rearward direction of the vehicle 100. In the present embodiment, the motor controller 2 acquires the actual moving direction of the vehicle 100 depending on whether the front motor rotation speed ωmf is positive or negative.

### (3) Motor Rotation Speed Nm

The motor controller 2 calculates the motor rotation speed Nm by multiplying the motor rotation speed ωm by a unit conversion coefficient (60/2n). That is, the motor controller 2 calculates a front motor rotation speed Nmf by converting a unit of the front motor rotation speed ωmf. Similarly, the motor controller 2 calculates a rear motor rotation speed Nmr by converting a unit of the rear motor rotation speed ωmr.

### (4) Wheel Speed ωw

The motor controller 2 calculates a front wheel speed ωwf, which is a wheel speed of the front wheel 9f, based on a value obtained by multiplying the front motor rotation speed ωmf by a dynamic radius Rf of the front wheel 9f and a gear ratio of the front speed reducer 5f. Similarly, the motor controller 2 calculates a rear wheel speed ωwr, which is a wheel speed of the rear wheel 9r, based on a value obtained by multiplying the rear motor rotation speed ωmr by a dynamic radius Rr of the rear wheel 9r and a gear ratio of the rear speed reducer 5r. In the present embodiment, the unit conversion coefficient is applied to the front wheel speed ωwf and the rear wheel speed ωwr obtained as described above, and a unit [m/s] of the front wheel speed ωwf and the rear wheel speed ωwr is converted into [km/h],

### 2. Basic Torque Target Value Calculation Processing

The basic torque target value calculation processing S202 is processing in which the motor controller 2 calculates a basic torque target value Tm0* based on the vehicle variables. The basic torque target value Tm0* is torque (requested torque) requested to the vehicle 100 by the driver's accelerator operation or the like. The basic torque target value Tm0* is a target value for a total amount of the torque generated by the front drive motor 4f and the torque generated by the rear drive motor 4r.

More specifically, the motor controller 2 refers to the accelerator position-torque table shown in FIG. 3, and calculates the basic torque target value Tm0* based on the accelerator position APO and the motor rotation speed ωm. When the motor controller 2 refers to the accelerator position-torque table, the front motor rotation speed ωmf, the rear motor rotation speed ωmr, an average value thereof, or the like can be used as the motor rotation speed ωm. In the present embodiment, the motor controller 2 calculates the basic torque target value Tm0* using the front motor rotation speed ωmf.

As shown in FIG. 3, the basic torque target value Tm0* is a positive value in a predetermined range within a range in which the motor rotation speed ωm is negative. This is a setting for suppressing rollback of the vehicle 100 or reducing a movement amount and/or a movement speed of the rollback. That is, in the basic torque target value calculation processing S202, by calculating the positive basic torque target value Tm0* in the predetermined range within the range in which the motor rotation speed ωm is negative, a basic driving force for suppressing movement of the vehicle 100 in the actual moving direction is set for the front wheel 9f and the rear wheel 9r at the time of rollback. However, when one of the front wheel 9f and the rear wheel 9r is on a road surface having a relatively low road surface resistance µ (hereinafter, referred to as a low µ road surface), as will be described later, the basic driving force for reducing the rollback may cause the driver to feel a sense of discomfort about an operation state of the vehicle. Therefore, as will be described later, the motor controller 2 sets an upper limit value for a torque distributed to the wheel on the low µ road surface.

### 3. Torque Distribution Processing

The torque distribution processing S203 is processing in which the motor controller 2 distributes the basic torque target value Tm0* to a target value of the torque generated by the front drive motor 4f and a target value of the torque generated by the rear drive motor 4r. That is, the torque distribution processing S203 is processing of distributing the basic torque target value Tm0* to the front wheel 9f and the rear wheel 9r.

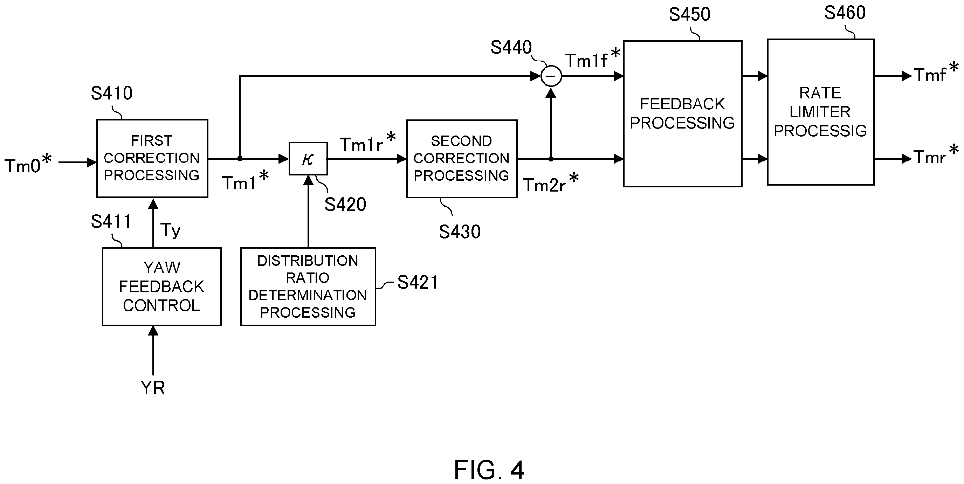

FIG. 4 is a block diagram showing a configuration of the torque distribution processing S203. As shown in FIG. 4, the torque distribution processing S203 includes first correction processing S410, distribution ratio multiplication processing S420, second correction processing S430, front torque target value calculation processing S440, feedback processing S450, and rate limiter processing S460.

### (1) First Correction Processing

In the first correction processing S410, the basic torque target value Tm0* is corrected before the distribution to the front wheel 9f and the rear wheel 9r, so that a total amount of driving forces generated in the front wheel 9f and the rear wheel 9r is limited. Specifically, in the first correction processing S410, a first torque target value Tm 1 * is calculated by multiplying the basic torque target value Tm0* by a predetermined coefficient β.

The predetermined coefficient β by which the basic torque target value Tm0* is multiplied represents a limit amount of the basic torque target value Tm0*. Therefore, the predetermined coefficient β is, for example, a positive number of 1 or less. The predetermined coefficient β is determined based on a yaw feedback torque Ty. The yaw feedback torque Ty is a torque for reducing a slip of the vehicle 100 in the lateral direction by feeding back the yaw feedback torque Ty to the first correction processing S410 as described above. The yaw feedback torque Ty is calculated in yaw feedback control S411. For example, the yaw feedback torque Ty is calculated based on a steering angle, a yaw rate YR, a deviation between the yaw rate YR and a target value thereof (hereinafter, referred to as a yaw rate target value), and the like. The yaw rate target value is determined based on, for example, the vehicle speed V and the steering angle.

In the first correction processing S410, since the basic torque target value Tm0* is limited by the predetermined coefficient β determined based on the yaw feedback torque Ty, the driving forces generated in the front wheel 9f and the rear wheel 9r are limited according to the yaw rate YR. As a result, since the yaw rate YR is reduced, the slip of the vehicle 100 in the lateral direction or a possibility thereof is reduced.

### (2) Distribution Ratio Multiplication Processing

In the distribution ratio multiplication processing S420, a first rear torque target value Tm1r* is calculated by multiplying the first torque target value Tm1* by a predetermined distribution ratio κ. In the distribution ratio determination processing S421, the distribution ratio κ is determined based on, for example, a setting of a travel mode, a transition of a position of a center of gravity of the vehicle 100, or the like. In the present embodiment, a first distribution ratio in which energy efficiency is prioritized, a second distribution ratio in which traveling stability is emphasized, and the like are determined in advance, and in the distribution ratio determination processing S421, the distribution ratio is selected from these distribution ratios according to the setting and the like.

### (3) Second Correction Processing

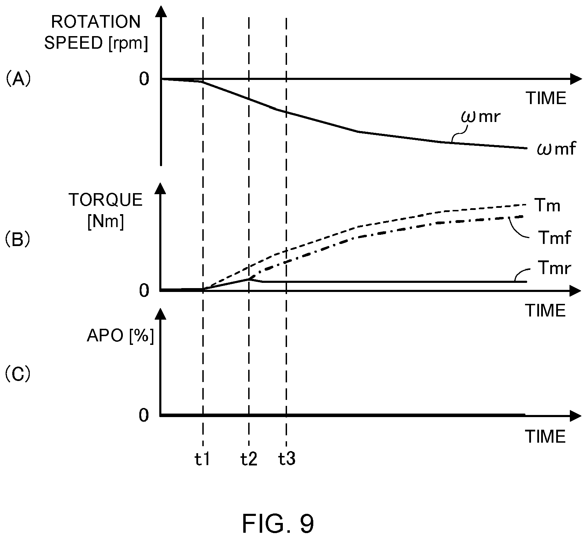

In the second correction processing S430, various types of correction processing and the like are performed on the first rear torque target value Tm1r* to calculate a second rear torque target value Tm2r*. The second rear torque target value Tm2r* becomes a rear torque target value Tmr* after being corrected in the feedback processing S450 and the rate limiter processing S460. The rear torque target value Tmr* is a target value of the torque distributed to the rear wheel 9r among the first torque target value Tm1*. That is, the rear torque target value Tmr* is a final target value of a torque output from the rear drive motor 4r to the rear wheel 9r. Therefore, the motor controller 2 controls the rear drive motor 4r based on the rear torque target value Tmr*. The various types of correction processing and the like performed in the second correction processing S430 will be described in detail later. The torque generated in the rear wheel 9r by the control based on the final rear torque target value Tmr* is a rear torque Tmr (see FIG. 9). The second correction processing S430 is feedforward control for determining a target value based on current vehicle variables or the like.

### (4) Front Torque Target Value Calculation Processing

In the front torque target value calculation processing S440, a first front torque target value Tm1f* is calculated by subtracting the second rear torque target value Tm2r* from the first torque target value Tm1*. The first front torque target value Tm1f* becomes a front torque target value Tmf* after being corrected in the feedback processing S450 and the rate limiter processing S460. The front torque target value Tmf* is a target value of the torque distributed to the front wheel 9f among the first torque target value Tm1*. That is, the front torque target value Tmf* is a final target value of torque output from the front drive motor 4f to the front wheel 9f. Therefore, the motor controller 2 controls the front drive motor 4f based on the front torque target value Tmf*. The actual torque generated in the front wheel 9f by the control based on the final front torque target value Tmf* is a front torque Tmf (see FIG. 9). A total amount of the rear torque Tmr and the front torque Tmf is a total torque Tm (see FIG. 9).

As will be described later, the second rear torque target value Tm2r* is obtained by reducing the first rear torque target value Tm1r* by a torque limit. For this reason, a calculation of subtracting the second rear torque target value Tm2r* from the first torque target value Tm1* in the front torque target value calculation processing S440 is substantially a calculation of adding a reduction amount of the rear torque (the torque of the rear wheel 9r) due to the torque limit to the front torque (the torque of the front wheel 91). Therefore, the first torque target value Tm1*, which is the total amount of torques distributed to the front wheel 9f and the rear wheel 9r, is maintained. As a result, when the driving force generated in the rear wheel 9r is reduced to be smaller than the basic driving force, the reduced driving force is added to the driving force generated in the front wheel 9f, and the front wheel 9f is driven with a driving force larger than the basic driving force.

In the present embodiment, in the front torque target value calculation processing S440, the first front torque target value Tm1f* is calculated by subtracting the second rear torque target value Tm2r* from the first torque target value Tm1*, and thus all of the reduction amount of the rear torque due to the torque limit is substantially added to the front torque. In the front torque target value calculation processing S440, a part of the reduction amount of the rear torque due to the torque limit may be added to the front torque. For example, the first front torque target value Tm1f* may be calculated by adding a part of a difference between the first rear torque target value Tm1r* and the second rear torque target value Tm2r* to a result of multiplying the first torque target value Tm1* by a distribution ratio " 1-κ".

### (5) Feedback Processing

In the feedback processing S450, a feedback torque FBTf (not shown) for the front wheel 9f and a feedback torque FBTr (not shown) for the rear wheel 9r are calculated. The feedback torque FBTf for the front wheel 9f is added to the first front torque target value Tmf1*, and the feedback torque FBTr for the rear wheel 9r is added to the second rear torque target value Tmr2*.

The feedback torque FBTf is calculated based on, for example, a deviation Δωm (not shown) between the front motor rotation speed ωmf and the rear motor rotation speed ωmr and/or a deviation Δωmf (not shown) between a target value (an estimated value) and an actual measurement value of the front motor rotation speed ωmf. Similarly, the feedback torque FBTr is calculated based on, for example, the deviation Δωm between the front motor rotation speed ωmf and the rear motor rotation speed ωmr and/or a deviation Δωmr (not shown) between a target value (an estimated value) and an actual measurement value of the rear motor rotation speed ωmr.

In the present embodiment, the feedback torque FBTf and FBTr is calculated based on the deviation Δωm between the front motor rotation speed ωmf and the rear motor rotation speed ωmr. The deviation Δωm represents a difference between rotation speeds (or rotation speeds) of the front wheel 9f and the rear wheel 9r, and relates to the slip of the front wheel 9f and the rear wheel 9r. Therefore, the addition of the feedback torque FBTf and FBTr calculated based on the deviation Δωm suppresses or reduces the slip of the front wheel 9f and the rear wheel 9r.

### (6) Rate Limiter Processing

In the rate limiter processing S460, an upper limit value is set for each change rate with respect to the first front torque target value Tmf1* to which the feedback torque FBTf is added and the second rear torque target value Tmr2* to which the feedback torque FBTr is added. By the rate limiter processing S460, the slip of the front wheel 9f and the rear wheel 9r is prevented or reduced.

### 4. Current Target Value Calculation Processing

In the current target value calculation processing S204 of FIG. 2, dq-axis current target values of the front drive motor 4f and the rear drive motor 4r are calculated. The dq-axis current target value of the front drive motor 4f is calculated by referring to a predetermined table based on the front torque target value Tmf* and the DC voltage value Vdc of the battery 1. Similarly, the dq-axis current target value of the rear drive motor 4r is calculated by referring to a predetermined table based on the rear torque target value Tmr* and the DC voltage value Vdc of the battery 1.

### 5. Current Control Processing

In the current control processing S205, by driving the front drive motor 4f and the rear drive motor 4r based on the dq-axis current target values, the torque indicated by the front torque target value Tmf* and the rear torque target value Tmr* is output.

Specifically, first, a dq-axis current value is calculated based on a three-phase AC current value and a rotor phase. Next, a dq-axis voltage command value is calculated based on a deviation between the dq-axis current value and the dq-axis current target value calculated in the current target value calculation processing S204. Further, a three-phase AC voltage command value is calculated based on the dq-axis voltage command value and the rotor phase. The PWM signal is obtained based on the three-phase AC voltage command value and the DC voltage value Vdc of the battery 1. The dq-axis current value, the dq-axis voltage command value, the three-phase AC voltage command value, and the PWM signal are calculated for the front drive motor 4f and the rear drive motor 4r. By turning on and off the switching elements of the front inverter 3f and the rear inverter 3r by the PWM signal obtained in this way, the front drive motor 4f and the rear drive motor 4r are driven by the torque designated by the front torque target value Tmf* and the rear torque target value Tmr*, respectively.

Next, the second correction processing S430 will be described in detail.

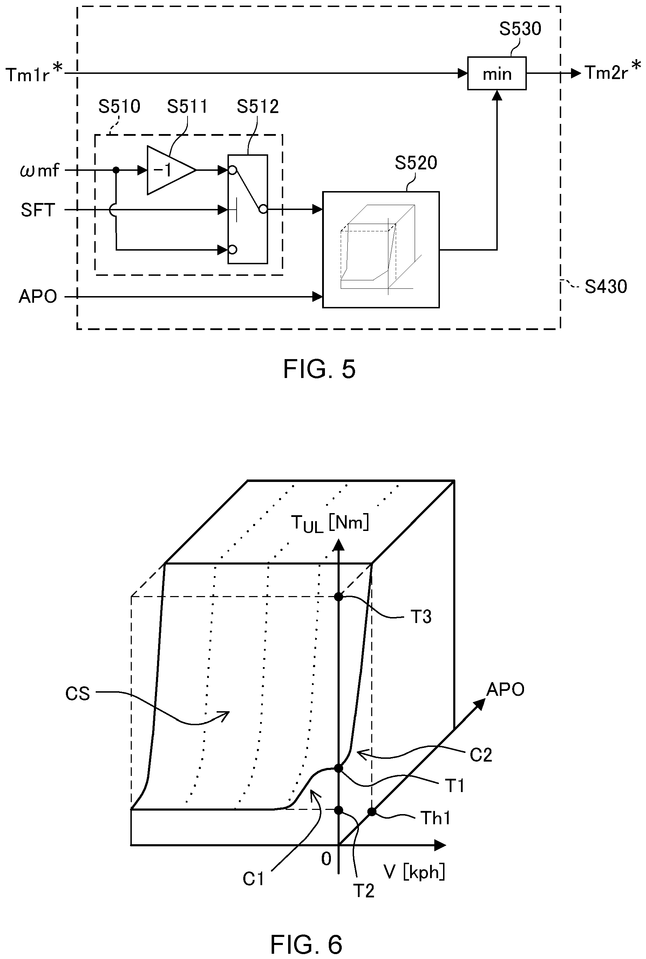

FIG. 5 is a block diagram showing a configuration of the second correction processing S430. As shown in FIG. 5, the second correction processing S430 includes reverse rotation determination processing S510, upper limit value calculation processing S520, and a minimum value processing S530.

### (a) Reverse Rotation Determination Processing

In the reverse rotation determination processing S510, it is determined whether the actual moving direction of the vehicle 100 is reverse with respect to the driving direction of the vehicle 100. In the present embodiment, the driving direction of the vehicle 100 is determined by the range signal SFT of the shift lever 16. In the present embodiment, the actual moving direction of the vehicle 100 is determined by the front motor rotation speed ωmf. In the reverse rotation determination processing S510, for example, when the vehicle 100 is on a slope, it is determined whether the vehicle 100 rolls back, or whether the vehicle 100 is rolling back. That is, it is determined whether the driving direction of the vehicle 100 indicated by the range signal SFT is different from the actual moving direction of the vehicle 100 indicated by the front motor rotation speed ωmf. As a result of this determination, when the driving direction is different from the actual moving direction, a negative front motor rotation speed ωmf is output. For example, when the front motor rotation speed ωmf is a negative value even though the range signal SFT is in the D range, the actual moving direction of the vehicle 100 is the rearward direction while the driving direction is the forward direction. This is, for example, a rollback scene in which the vehicle 100 moves backward on an uphill road. When the front motor rotation speed ωmf is a positive value even though the range signal SFT is in the R range, the actual moving direction of the vehicle 100 is the forward direction while the driving direction is the rearward direction. This is, for example, a rollback scene in which the vehicle 100 moves forward on a downhill road. In the present embodiment, "rollback" means that the vehicle 100 moves in a direction opposite to the driving direction. Therefore, the rollback includes not only a case where the vehicle 100 moves rearward but also a case where the vehicle 100 moves forward as described above.

More specifically, the reverse rotation determination processing S510 includes multiplication processing S511 and output selection processing S512.

In the multiplication processing S511, the front motor rotation speed ωmf is multiplied by "-1". Accordingly, a sign of the front motor rotation speed ωmf is inverted. A calculation result of the multiplication processing S511 is used in the output selection processing S512.

In the output selection processing S512, one of the front motor rotation speed ωmf whose sign is inverted in the multiplication processing S511 and the calculated front motor rotation speed ωmf (a front motor rotation speed ωmf before sign inversion) is selected and output for use in the upper limit value calculation processing S520. The selection is performed based on the range signal SFT of the shift lever 16. Specifically, when the range signal SFT of the shift lever 16 is in the R range, the front motor rotation speed ωmf whose sign is inverted is selected. When the range signal SFT of the shift lever 16 is in the D range, the front motor rotation speed ωmf before the sign inversion is selected. Accordingly, in the output selection processing S512, when the vehicle 100 rolls back, the negative front motor rotation speed ωmf is output.

### (b) Upper Limit Value Calculation Processing

In the upper limit value calculation processing S520, an upper limit value T_{UL} is calculated based on the vehicle speed V and the accelerator position APO. The upper limit value T_{UL} calculated in the upper limit value calculation processing S520 is used in the minimum value processing S530. Accordingly, the upper limit value T_{UL} functions as a torque limit imposed on the first rear torque target value Tmr1* at the time of rollback.

FIG. 6 is a map showing the upper limit value T_{UL} set in a torque limit imposed at the time of rollback. As shown in FIG. 6, the upper limit value T_{UL} is determined according to a value of the accelerator position APO in a range in which the vehicle speed V is zero or less. The vehicle speed V shown in FIG. 6 can be directly acquired as a vehicle variable, and the front motor rotation speed ωmf or the rear motor rotation speed ωmr, which is the motor rotation speed ωm, can be converted into a vehicle speed (a rear wheel speed ωwr, which is a wheel speed ωw) and used instead of the vehicle speed V. In the present embodiment, the front motor rotation speed ωmf output as a determination result of the reverse rotation determination processing S510 is converted into the vehicle speed V and used.

When the vehicle speed V is zero and the accelerator position APO is zero, the upper limit value T_{UL} (hereinafter, referred to as a basic upper limit value) is "T1". The basic upper limit value T1 is a predetermined value for smooth connection without forming a discontinuity with respect to a normal torque distributed when the vehicle speed V is a positive value, that is, a torque distributed when the driving direction and the actual moving direction coincide with each other. Accordingly, when the rollback is started and the torque limit is performed, and when the rollback is stopped and the control is shifted to the normal control, shock or hunting to the vehicle 100 does not occur, and the shift is smooth.

When the accelerator position APO is zero, the upper limit value T_{UL} is determined to smoothly decrease from the basic upper limit value T1 along a predetermined slope C1 in a predetermined range in which an absolute value of the vehicle speed V is relatively small. Due to the presence of the slope C1, robustness is ensured with respect to the fluctuation of the vehicle speed V, that is, with respect to the fluctuation of the motor rotation speed ωm. A specific shape of the slope C1 is determined in advance by experiments, simulations, or the like.

When the accelerator position APO is zero, the vehicle speed V is smaller and a movement speed of the rollback is larger than a range in which the upper limit value T_{UL} is determined by the slope C1, the upper limit value T_{UL} is set to a predetermined value T2, which is a constant value, for example. The predetermined value T2 is a value at which the idling of the wheels is suppressed, and is determined in advance by experiments, simulations, or the like. In order to exert an appropriate driving force while suppressing the idling of the wheels, for example, it is preferable to set the upper limit value T_{UL} to be smaller from the basic upper limit value T1 as the vehicle speed V increases, and to increase the torque limit as the vehicle speed V increases, instead of setting the predetermined value T2.

When the vehicle speed V is zero, the upper limit value T_{UL} is determined to increase from the basic upper limit value T1 to a maximum value T3 in a range in which the accelerator position APO is equal to or less than a predetermined threshold value Th1. The predetermined threshold value Th1 is, for example, a value that determines a range in which the accelerator position APO is substantially zero. Further, the maximum value T3 is determined to be sufficiently large with respect to a value that can be input as the first rear torque target value Tm1r* for setting the upper limit value T_{UL}. That is, in a range in which the upper limit value T_{UL} is the maximum value T3, the torque limit is substantially released. For this reason, the torque limit is not substantially performed at the accelerator position APO larger than the threshold value Th1. The range in which the upper limit value T_{UL} is the maximum value T3 is a range in which the accelerator position APO is equal to or greater than the threshold value Th1 regardless of the vehicle speed V. Therefore, the upper limit value T_{UL} acts in a range in which the accelerator position APO less than the threshold value Th1 is substantially zero.

The upper limit value T_{UL} is determined to smoothly increase from the basic upper limit value T1 along a predetermined slope C2. Due to the presence of the slope C2, robustness against the fluctuation of the accelerator position APO is ensured. A specific shape of the slope C2 is determined in advance based on experiments, simulations, or the like.

In addition, a curved surface CS of the upper limit value T_{UL} formed in a range in which the vehicle speed V is zero or less and the accelerator position APO is equal to or less than the threshold value Th 1 is determined so that a smooth convex portion is formed by the slope C1 and the slope C2, and steep unevenness or discontinuity is not formed. Accordingly, in the range of the vehicle speed V and the accelerator position APO to which the upper limit value T_{UL} is applied, robustness against fluctuations in the motor rotation speed ωm and the accelerator position APO is secured.

### (c) Minimum Value Processing

In the minimum value processing S530, the first rear torque target value Tmr1* and the upper limit value T_{UL} calculated in the upper limit value calculation processing S520 are compared with each other, and a smaller value thereof is output as the second rear torque target value Tmr2*. As a result, in the minimum value processing S530, the second rear torque target value Tmr2* in which the first rear torque target value Tmr1* is limited to the upper limit value T_{UL} or less is output. That is, in the minimum value processing S530, a torque limit is executed to limit the first rear torque target value Tmr1* to the upper limit value T_{UL} or less. When the driving direction and the actual moving direction of the vehicle 100 are the same direction, the upper limit value T_{UL} is the maximum value T3, and the torque limit is substantially released, and thus the first rear torque target value Tmr1* is output as the second rear torque target value Tmr2* as it is.

As described above, by the second correction processing S430, the second rear torque target value Tm2r* in which the first rear torque target value Tm1r* is limited to the upper limit value T_{UL} or less is output. The second rear torque target value Tm2r* output as a result of the second correction processing S430 in this way finally becomes the rear torque target value Tmr* through the feedback processing S450 and the rate limiter processing S460 as described above.

In the above description, in the torque distribution processing S203 shown in FIG. 4, the front wheel 9f and the rear wheel 9r have a precedence relationship or a priority relationship. For example, there is a precedence relationship in which the torque distributed to the rear wheel 9r is determined first, and the torque distributed to the front wheel 9f is determined accordingly. There is a priority relationship in which the upper limit value T_{UL} is set for the torque (the second rear torque target value Tmr2*) of the rear wheel 9r using the rotation speed (the front motor rotation speed ωmf) of the front wheel 9f. In the present embodiment, when the vehicle speed V is acquired by converting the motor rotation speed ωm, there is a priority relationship in which the front motor rotation speed ωmf is used instead of the rear motor rotation speed ωmr.

However, the precedence relationship and the priority relationship can be exchanged, and the motor controller 2 controls the vehicle 100 by interchanging the precedence relationship and the priority relationship as necessary. That is, the motor controller 2 may calculate the torque of the rear wheel 9r by first calculating the torque of the front wheel 9f and then subtracting the calculated torque of the front wheel 9f from the first torque target value Tm1* which is the total amount of the torque to be distributed, similarly to determining the torque of the rear wheel 9r in the torque distribution processing S203 shown in FIG. 4. In this case, in a process of calculating the torque of the front wheel 9f, the second correction processing S430 is performed on the torque of the front wheel 9f, and the upper limit value T_{UL} is set for the torque of the front wheel 9f. When the second correction processing S430 is performed on the torque of the front wheel 9f, the rear motor rotation speed ωmr is used instead of the front motor rotation speed ωmf in the reverse rotation determination processing S510 and the upper limit value calculation processing S520. When the vehicle speed V is acquired by converting the motor rotation speed ωm, the rear motor rotation speed ωmr is used.

Therefore, in the vehicle 100 of the present embodiment, the motor controller 2 determines whether the driving direction and the actual moving direction of the vehicle 100 are different from each other by the reverse rotation determination processing S510. As a result of the reverse rotation determination processing S510, when the driving direction and the actual moving direction of the vehicle 100 are different from each other, the torque limit is performed to limit the torque distributed to the one wheel of the front wheel 9f and the rear wheel 9r to the upper limit value T_{UL} or less (the torque limit). Accordingly, when the driving direction and the actual moving direction of the vehicle 100 are different from each other, a limit (hereinafter, referred to as a driving force limit) on setting an upper limit value P_{UL} (not shown) corresponding to the upper limit value T_{UL} for a driving force generated in the one wheel of the front wheel 9f and the rear wheel 9r is performed. Further, the one wheel whose driving force is limited by the driving force limit is driven with a driving force generated by the feedback torque FBTf and FBTr, which is smaller than the basic driving force.

Hereinafter, functions and effects of the vehicle 100 of the present embodiment will be described.

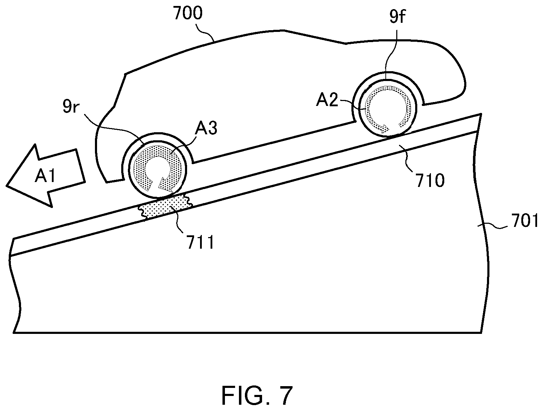

FIG. 7 is an explanatory diagram illustrating an example of a situation in which the electric four-wheel drive vehicle may roll back. A vehicle 700 of a comparative example shown in FIG. 7 is a vehicle that performs the same control as that of the vehicle 100 according to the embodiment except that the torque limit in the second correction processing S430 is not implemented.

As shown in FIG. 7, the vehicle 700 of the comparative example is stopped on a slope 701 with a forward direction facing an uphill direction. A road surface of the slope 701 is, for example, a compacted snow road surface 710, and a part thereof includes a frozen road surface (an icy road) 711 which is a relatively low µ road surface with respect to the compacted snow road surface 710. For the sake of simplicity, it is assumed that the wheels grip on the compacted snow road surface 710, the wheels hardly grip on the frozen road surface 711, and the wheels slip when a predetermined driving force is generated on the wheels.

In the above situation, when the driver selects the D range with the shift lever 16 and starts the vehicle 700 of the comparative example, a driving direction of the vehicle 700 of the comparative example intended by the driver is the forward direction (that is, a direction in which the vehicle 700 climbs the slope). Depending on an inclination angle of the slope 701 or the like, rollback may occur in which the vehicle 700 moves in a rearward direction A1 before an accelerator pedal is operated, that is, in a state where the accelerator position APO is zero. When the rollback occurs, the motor controller 2 of the vehicle 700 of the comparative example generate a basic driving force for driving the vehicle 100 in the driving direction for the front wheel 9f and the rear wheel 9r. As a result, in a normal road surface state in which the wheels grip the road surface, the occurrence of rollback is suppressed, or a speed of rollback or the like is reduced.

However, when the front wheel 9f is on the compacted snow road surface 710 and the rear wheel 9r is on the frozen road surface 711, there is a difference in road surface resistance µ between the front wheel 9f and the rear wheel 9r. For this reason, when the basic driving force is generated in the front wheel 9f and the rear wheel 9r, the front wheel 9f gripping the compacted snow road surface 710 are balanced with, for example, a force by which the vehicle 100 tries to roll back, or are rotated in a rearward direction A2 along with the rollback of the vehicle 100. The operation of the front wheel 9f is naturally predicted by the driver.

On the other hand, the rear wheel 9r does not grip the road surface because the rear wheel 9r is on the frozen road surface 711, which is a low µ road surface. For this reason, in the vehicle 700 of the comparative example, when the basic driving force is generated in the rear wheel 9r, the rear wheel 9r idles in a forward direction A3, which is the driving direction. Since almost all of the basic driving force generated in the rear wheel 9r is used for the idling, a speed of the idling of the rear wheel 9r is steeply generated. Judging from the vehicle speed V due to the rollback felt by the driver, the idling of the rear wheel 9r is a high rotation speed exceeding the normal prediction of the driver. In addition, the idling of the rear wheel 9r occurs even when the driver does not substantially operate an accelerator leading to rotation of the wheels and the accelerator position APO is zero. Therefore, the idling of the rear wheel 9r occurring in the vehicle 700 of the comparative example may give a sense of discomfort to the driver.

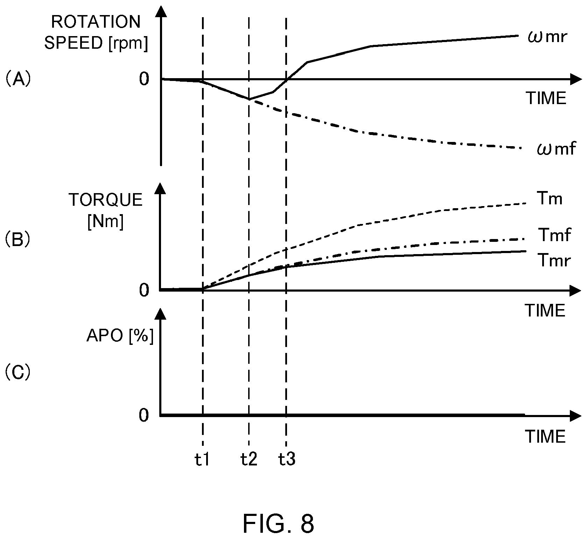

FIG. 8 is a graph showing changes in rotation speed, torque, and accelerator position of wheels in the comparative example in which the torque limit is not implemented. As shown in (A) of FIG. 8, when the vehicle 700 of the comparative example starts to roll back at time 11, the front wheel 9f and the rear wheel 9r of the vehicle 700 of the comparative example are rotated along with the rollback, and thus the front motor rotation speed ωmf and the rear motor rotation speed ωmr decrease. At this time, as shown in (B) of FIG. 8, the total torque Tm of the front wheel 9f and the rear wheel 9r increases by the feedback processing S450. At this point (time t1 to t2), there is no substantial difference between the front torque Tmf, which is the torque of the front wheel 9f, and the rear torque Tmr, which is the torque of the rear wheel 9r.

However, when the rear wheel 9r on the frozen road surface 711 slip at time t2, the rear motor rotation speed ωmr increases as shown in (A) of FIG. 8. Eventually, for example, at time t3, although the front wheel 9f is rotating in the actual moving direction due to the rollback, the rear motor rotation speed ωmr turns to rotation (forward rotation) toward the driving direction. For this reason, after the time t3, rotation directions of the front wheel 9f and the rear wheel 9r are reverse.

Thereafter (after the time t3), the rear motor rotation speed ωmr continues to increase further, and the idling of the rear wheel 9r does not stop. As shown in (B) of FIG. 8, in the vehicle 700 of the comparative example, since the torque distribution processing S203 is executed without performing the torque limit, there is no substantial difference between the front torque Tmf and the rear torque Tmr between the time t2 and the time t3 and after the time t3.

As shown in (C) of FIG. 8, the idling of the rear wheel 9r as described above occurs even while the driver does not operate the accelerator at all and the accelerator position APO continues to be zero.

FIG. 9 is a graph showing changes in rotation speed, torque, and accelerator position of wheels when the torque limit is implemented. That is, in a case where the vehicle 100 of the present embodiment is in the same situation as the vehicle 700 of the comparative example, as shown in (A) of FIG. 9, when the vehicle 100 starts to roll back from time t1, the front wheel 9f and the rear wheel 9r are rotated along with the rollback, and thus the front motor rotation speed ωmf and the rear motor rotation speed ωmr decrease. As shown in (B) of FIG. 9, the total torque Tm increases due to the rollback of the vehicle 100, and there is no substantial difference between the front torque Tmf and the rear torque Tmr. These are the same as those of the vehicle 700 of the comparative example.

However, when the rear wheel 9r is likely to slip at time t2, the torque limit in the second correction processing S430 is executed in the vehicle 100. Accordingly, the second rear torque target value Tm2r* becomes a value limited by the upper limit value T_{UL}. As a result, as shown in (B) of FIG. 9, after the time t2, the rear torque Tmr becomes a value determined by the upper limit value T_{UL}. Since the front torque target value Tmf* is calculated by subtracting the rear torque target value Tmr* from the first torque target value Tm1*, the total torque Tm is maintained. A decrease amount of the rear torque Tmr due to the torque limit is compensated by an increase in the front torque Tmf.

When the rear torque Tmr is subject to torque limit by the upper limit value T_{UL} as described above, the rear wheel 9r generates a driving force within a range in which the rear wheel 9r substantially grips the frozen road surface 711. For this reason, the rear wheel 9r does not substantially slip, and maintains the rotation accompanied by the rollback similarly to the front wheel 9f. Therefore, as shown in (A) of FIG. 9A, the rear motor rotation speed ωmr continues to have substantially the same value as the front motor rotation speed ωmf after the time t2. That is, even if the rear wheel 9r does not idle and the rear wheel slightly slips at the moment of time t2, the driver can allow the operation of the vehicle 100 as a behavior at the time of rollback that can be naturally predicted. Therefore, the driver does not feel a sense of discomfort from the vehicle 100 at the time of rollback.

Conditions of the accelerator operation are the same as those in the case of the vehicle 700 of the comparative example described above. That is, as shown in (C) of FIG. 9, the above operation of the vehicle 100 is an operation while the driver does not perform the accelerator operation at all and the accelerator position APO continues to be zero.

Although an example in which the vehicle 100 faces forward in the uphill direction has been described here, when the vehicle 100 faces forward in the downhill direction, control is also executed in which the precedence relationship and the priority relationship between the front wheel 9f and the rear wheel 9r are interchanged. For this reason, when the vehicle 100 faces forward in the downhill direction, the vehicle 100 also operates in the same manner as described above. Therefore, the driver does not feel a sense of discomfort from the vehicle 100 at the time of rollback.

As described above, the control method for the electric four-wheel drive vehicle according to the present embodiment is a control method for an electric four-wheel drive vehicle (the vehicle 100) including a front drive source (the front drive motor 4f) for driving the front wheel 9f and a rear drive source (the rear drive motor 4r) for driving the rear wheel 9r independently of the front wheel 9f. The electric four-wheel drive vehicle (the vehicle 100) according to the present embodiment acquires the driving direction of the electric four-wheel drive vehicle (the vehicle 100) based on the input state (the range signal SFT) of the shift lever 16, and acquires the actual moving direction of the electric four-wheel drive vehicle (the vehicle 100). In the electric four-wheel drive vehicle (the vehicle 100) according to the present embodiment, when the driving direction and the actual moving direction are different from each other, [i] the basic driving force for suppressing movement in the actual moving direction is set for the front wheel 9f and the rear wheel 9r, and [ii] a limit for setting an upper limit value for the driving force generated in the one wheel (for example, the rear wheel 9r) of the front wheel 9f and the rear wheel 9r is implemented, thereby driving the one wheel (for example, the rear wheel 9r) with a driving force smaller than the basic driving force.

Accordingly, even if there is a difference in road surface resistance between the road surfaces with which the front wheel 9f and the rear wheel 9r are in contact, the front wheel 9f or the rear wheel 9r does not idle due to the generation of the basic driving force. In particular, the front wheel 9f or the rear wheel 9r does not rotate in a direction opposite to a rollback direction. For this reason, the control is continued so that the driver does not feel a sense of discomfort about the operation state of the vehicle 100.

In particular, as in the embodiment, [ii] the second correction processing S430 of implementing the limit for setting the upper limit value for the driving force generated in the one wheel (for example, the rear wheel 9r) of the front wheel 9f and the rear wheel 9r is feedforward control based on the current vehicle variables and the like. For this reason, before the one wheel actually slips or idles, that is, at a stage where the one wheel is likely to slip or idle, the control method for the electric four-wheel drive vehicle according to the present embodiment can suppress the occurrence of the slip or idling or can reduce the time, speed, or other degrees of the slip or idling.

For example, in a case where the same processing as the second correction processing S430 is performed by the feedback control, it is impossible to suppress the slip or idling unless the one wheel actually slips or idles. When the above processing is performed in the feedback control, a dead zone that delays the start of the feedback control may be provided in order to improve the stability of the control. Further, in the feedback control, a dead zone may occur due to a response delay of a system or the like. From the viewpoint of having such a dead zone, the feedback control cannot suppress the one wheel from actually slipping or idling. Therefore, since the second correction processing S430 is the feedforward control, it is possible to more favorably prevent the wheels from idling and prevent the driver from feeling a sense of discomfort, as compared with a case where the same processing is implemented by the feedback control.

In the control method for the electric four-wheel drive vehicle according to the present embodiment, the upper limit value is set for the driving force generated in the one wheel (for example, the rear wheel 9r) in the actual moving direction of the front wheel 9f and the rear wheel 9r. When the vehicle 100 rolls back a certain distance, even if the front wheel 9f and the rear wheel 9r are both on a grippable road surface such as the compacted snow road surface 710 at first, there may be a low µ road surface such as the frozen road surface 711 ahead of the grippable road surface. In such a case, the one wheel in the actual moving direction often runs on the low µ road surface before the other wheel (for example, the front wheel 91). Therefore, as in the embodiment, by setting the upper limit value for the driving force generated in the one wheel in the actual moving direction, the one wheel does not unexpectedly idle even when the one wheel runs on the low µ road surface during the rollback. Therefore, the control method for the electric four-wheel drive vehicle according to the present embodiment does not give a sense of discomfort to the driver.

In the control method for the electric four-wheel drive vehicle according to the present embodiment, when the limit for setting the upper limit value for the driving force generated in the one wheel (for example, the rear wheel 9r) of the front wheel 9f and the rear wheel 9r is implemented, the other wheel (for example, the front wheel 9f) of the front wheel 9f and the rear wheel 9r is driven with a driving force larger than the basic driving force. Therefore, although a total driving force of the vehicle 100 decreases due to a decrease in the driving force of the one wheel for which the upper limit value of the driving force is set, at least a part of the reduced driving force of the one wheel is compensated by the driving force of the other wheel. As a result, even when the limit for setting the upper limit value for the driving force generated in the one wheel is implemented, the rollback of the vehicle 100 is easily suppressed. In the present embodiment, when the other wheel is driven by the driving force larger than the basic driving force, the basic driving force of the other wheel is compensated for a reduction amount of the driving force of the one wheel. However, the present invention is not limited to this example, and the driving force of the other wheel may be a value obtained by adding a driving force larger than the reduction amount of the driving force of the one wheel to the basic driving force.

In the control method for the electric four-wheel drive vehicle according to the present embodiment, at least a part of the reduced driving force of the one wheel (for example, the rear wheel 9r) is added to the driving force generated in the other wheel, thereby driving the other wheel (for example, the front wheel 9f) with the driving force larger than the basic driving force. Accordingly, at least a part of the reduced driving force of the one wheel is directly compensated by the driving force of the other wheel, and thus the rollback of the vehicle 100 is likely to be reliably suppressed.

More specifically, in the control method for the electric four-wheel drive vehicle according to the present embodiment, a total amount of the basic driving force is kept constant by driving the other wheel (for example, the front wheel 9f) with a driving force obtained by subtracting the driving force generated in the one wheel (for example, the rear wheel 9r) for which the upper limit value is set from the total amount of the basic driving force generated in the front wheel 9f and the rear wheel 9r. For this reason, the control method for the electric four-wheel drive vehicle according to the present embodiment can implement the limit for setting the upper limit value for the driving force generated in the one wheel and suppress the rollback of the vehicle 100 in the same manner as in a case where there is no such limit. That is, in the control method for the electric four-wheel drive vehicle according to the present embodiment, since the total amount of the basic driving force does not change, it is possible to suppress the occurrence of rollback. In addition, the control method for the electric four-wheel drive vehicle according to the present embodiment can reduce the speed of rollback even when the rollback occurs.

In the control method for the electric four-wheel drive vehicle according to the present embodiment, when the limit for setting the upper limit value for the driving force generated in the one wheel (for example, the rear wheel 9r) of the front wheel 9f and the rear wheel 9r is implemented, the basic driving force can be calculated based on a rotation speed of the other wheel (for example, the front wheel 91). That is, the upper limit value T_{UL} set in the torque limit imposed at the time of rollback can be calculated based on the wheel speed of the other wheel for which the upper limit value is not set. As mentioned above, the one wheel in the actual moving direction often runs on the low µ road surface before the other wheel, but the speed of the vehicle 100 can be accurately grasped based on the wheel speed of the other wheel gripping the road surface. As a result, it is possible to appropriately set the upper limit value for the driving force of the one wheel regardless of the degree of slip of the one wheel or the like, and to more reliably perform control that does not give a sense of discomfort to the driver.

In addition, in the control method for the electric four-wheel drive vehicle according to the present embodiment, when the limit for setting the upper limit value for the driving force generated in the one wheel (for example, the rear wheel 9r) is implemented, the upper limit value is set within a range in which the one wheel grips the road surface. A driving force is also generated in the one wheel within a range in which the idling and/or reverse rotation of the one wheel that causes the driver to feel a sense of discomfort does not occur. Therefore, the vehicle 100 can continue a stable operation as a four-wheel drive vehicle within a range in which the driving force generated in the one wheel is limited.

In the control method for the electric four-wheel drive vehicle according to the present embodiment, when the limit for setting the upper limit value for the driving force generated in the one wheel (for example, the rear wheel 9r) is implemented, the upper limit value is set according to the vehicle speed (see FIG. 6). Accordingly, the driving force of the one wheel is appropriately limited in accordance with a specific situation of the rollback. For example, in a range in which the vehicle speed V is low (the vehicle speed V is close to zero), the driving force of the one wheel is smoothly reduced without forming a discontinuity with respect to a normal driving force distributed when the vehicle speed V is a positive value. As a result, even if the limit for the driving force of the one wheel is started, stable control can be continued without causing shock, vibration, or the like to the vehicle 100.

In the control method for the electric four-wheel drive vehicle according to the present embodiment, the motor controller 2 determines whether the accelerator position APO is equal to or less than the predetermined threshold value Th1. As a result of the determination, when the accelerator position APO is equal to or less than the predetermined threshold value Th1, a limit for setting an upper limit value for the driving force generated in the one wheel (for example, the rear wheel 9r) is implemented, and when the accelerator position APO is greater than the threshold value Th 1, the limit is substantially released, and a torque limit is substantially not implemented. One of the situations in which the driver is particularly likely to feel a sense of discomfort about the operation of the vehicle 100 when the idling occurs in the one wheel is a case in which the driver does not perform the accelerator operation. That is, the driver may feel anxiety about the rotation of the one wheel without permission even though the driver does not perform any accelerator operation. On the other hand, when the driver is performing the accelerator operation, since the driver is performing an operation that causes the wheels to rotate, the driver is less likely to feel a sense of discomfort about the vehicle 100 even if the one wheel idles. Therefore, as described above, the limit for setting the upper limit value for the driving force generated in the one wheel is implemented in a range in which the driver does not substantially perform the accelerator operation, and the limit is released when the accelerator operation is clearly performed. Accordingly, it is possible to appropriately suppress the idling of the one wheel in a scene in which the driver is particularly likely to feel a sense of discomfort about the vehicle 100.

In the control method for the electric four-wheel drive vehicle according to the present embodiment, in a case where the limit for setting the upper limit value for the driving force generated in the one wheel (for example, the rear wheel 9r) is implemented, when the one wheel rotates in a direction opposite to the driving direction, the limit is released. In a case where the one wheel for which the upper limit value of the driving force is set rotates in a direction opposite to the driving direction, that is, in a direction in which the vehicle 100 rolls back, the one wheel grips the road surface even if the one wheel is on the low µ road surface. Therefore, when the one wheel for which the upper limit value of the driving force should be set is gripping the road surface, the limit for setting the upper limit value for the driving force is released. Accordingly, the vehicle 100 can continue a stable operation as a four-wheel drive vehicle even during rollback.

The control method for the electric four-wheel drive vehicle according to the present embodiment is particularly suitable for a scene in which the vehicle 100 rolls back on the slope 701 as in the embodiment, but the control method for the electric four-wheel drive vehicle according to the present embodiment is also suitable for other scenes.

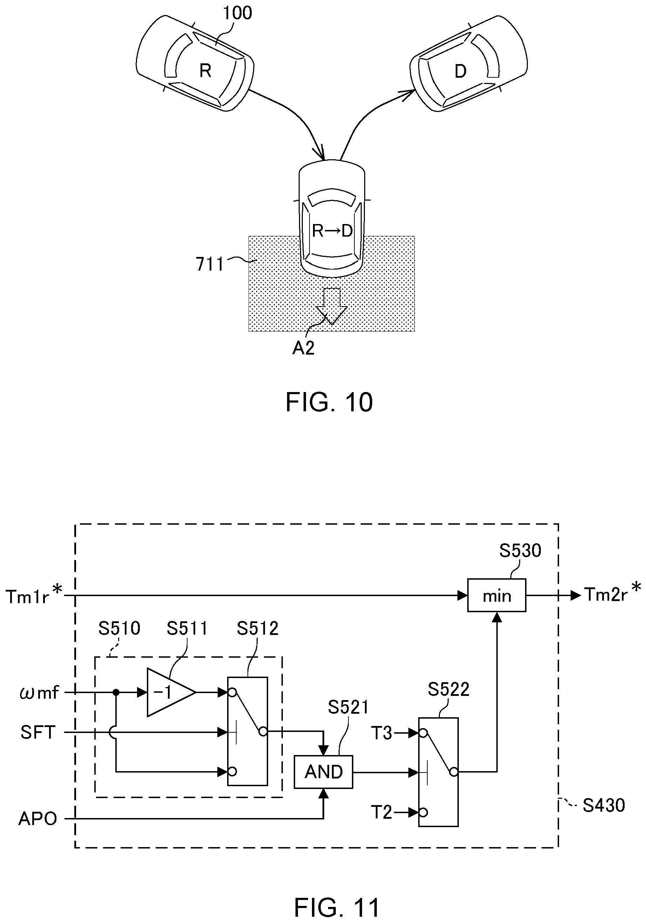

FIG. 10 is an explanatory diagram showing a situation in which an operation similar to that during rollback may occur. As shown in FIG. 10, in a case where a direction of the vehicle 100 is changed, the vehicle 100 is completely stopped when the shift lever 16 is switched from the R range to the D range, which is an ideal driving mode of the vehicle 100. However, when such a direction change is actually performed, the vehicle 100 is not completely stopped at the time when the shift lever 16 is switched from the R range to the D range, and the vehicle 100 often moves backward by inertia. In such a driving mode, at the timing when the range of the shift lever 16 is switched to the D range, the actual moving direction is the rearward direction A2 although the driving direction of the vehicle 100 is the forward direction. For this reason, for example, when the rear wheel 9r is on the frozen road surface 711 at the timing when the range of the shift lever 16 is switched, if the control method for the electric four-wheel drive vehicle according to the present embodiment is not implemented, the rear wheel 9r may idle similarly to the case of rolling back on the slope 701, and the driver may feel a sense of discomfort about the operation state of the vehicle 100. On the other hand, if the control method for the electric four-wheel drive vehicle according to the present embodiment is implemented, the idling of the rear wheel 9r is suppressed as in the above embodiment. As a result, the control is continued so that the driver does not feel a sense of discomfort about the operation state of the vehicle 100.

In a conventional four-wheel drive vehicle in which all of the front wheels 9f and the rear wheels 9r are coupled by a mechanical mechanism, due to a structure thereof, the idling of the one wheel (for example, the rear wheel 9r), which is a problem during rollback or the like in the embodiment, cannot occur. Therefore, the control method for the electric four-wheel drive vehicle according to the present embodiment solves the problem unique to the electric four-wheel drive vehicle (the vehicle 100) including the front drive source (the front drive motor 4f) for driving the front wheel 9f and the rear drive source (the rear drive motor 4r) for driving the rear wheel 9r independently of the front wheel 9f.

Although the embodiment of the present invention has been described above, configurations described in the embodiment and the modification are only a part of application examples of the present invention, and are not intended to limit the technical scope of the present invention.

For example, in the embodiment, the upper limit value T_{UL} is set based on the graph shown in FIG. 6, so that the setting of the upper limit value T_{UL} smoothly changes in accordance with the accelerator position APO and the vehicle speed V. However, the upper limit value T_{UL} may be switched in accordance with the accelerator position APO and the vehicle speed V by selecting the upper limit value T_{UL} to be used from a plurality of preset candidates.

In the embodiment, the map (see FIG. 6) for determining the upper limit value T_{UL} is used when the torque limit is performed in the second correction processing S430, but the upper limit value T_{UL} of the torque limit can be determined by methods other than using the map.

For example, FIG. 11 is a block diagram illustrating a configuration of second correction processing S430 according to a modification. As shown in FIG. 11, the second correction processing S430 of the modification includes upper limit value switching determination processing S521 and upper limit value selection processing S522 instead of the upper limit value calculation processing S520.

In the upper limit value switching determination processing S521, an upper limit value switching determination flag for switching the upper limit value T_{UL} is output according to a result of the reverse rotation determination processing S510 and the accelerator position APO. More specifically, in the upper limit value switching determination processing S521, it is determined whether a front motor rotation speed ωmf input as a result of the reverse rotation determination processing S510 due to the rollback of the vehicle 100 is negative. In the upper limit value switching determination processing S521, it is determined whether the accelerator position APO is zero. In the upper limit value switching determination processing S521, the upper limit value switching determination flag is output, which is "true" when the front motor rotation speed ωmf is negative and the accelerator position APO is zero, and otherwise "false".

In the upper limit value selection processing S522, the upper limit value T_{UL} is selected from a first upper limit value that substantially releases the torque limit and a second upper limit value that is a minimum guaranteed torque, based on the upper limit value switching determination flag. The first upper limit value is, for example, the maximum value T3 of the upper limit value T_{UL} in the embodiment. The second upper limit value is the predetermined value T2 in the embodiment. For this reason, in the upper limit value selection processing S522, the second upper limit value is selected when the upper limit value switching determination flag is "true", and the first upper limit value is selected when the upper limit value switching determination flag is "false".

As described above, by switching the upper limit value T_{UL} between the first upper limit value and the second upper limit value based on the result of the reverse rotation determination processing S510 and the accelerator position APO instead of using the map of the upper limit value T_{UL} (see FIG. 6), the torque limit of the embodiment can be easily implemented. In the embodiment described above, by using the map of the upper limit value T_{UL} (see FIG. 6), a substantial torque limit is implemented when the accelerator position APO is equal to or less than the predetermined threshold value Th1, and the torque limit is substantially released when the accelerator position APO is greater than the threshold value Th1, and thus the torque limit is adjusted so as not to substantially implement the torque limit. On the other hand, the modification corresponds to a case where the threshold value Th1 is zero. That is, in the modification, the torque limit is implemented when the accelerator position APO is equal to or less than the predetermined threshold value (the accelerator position APO is zero), and the torque limit is substantially released when the accelerator position APO is greater than the threshold value (the accelerator position APO is greater than zero), and thus the torque limit is changed so as not to substantially implement the torque limit.

## Claims

1. A control method for an electric four-wheel drive vehicle including a front drive source for driving a front wheel and a rear drive source for driving a rear wheel independently of the front wheel, the control method comprising:
acquiring a driving direction of the electric four-wheel drive vehicle based on an input state of a shift lever;
acquiring an actual moving direction of the electric four-wheel drive vehicle; and
when the driving direction and the moving direction are different from each other,
setting a basic driving force for suppressing movement in the moving direction for the front wheel and the rear wheel, and
driving one wheel of the front wheel and the rear wheel with a driving force smaller than the basic driving force by implementing a limit for setting an upper limit value for a driving force generated in the one wheel.

2. The control method for an electric four-wheel drive vehicle according to claim 1, wherein
the upper limit value is set for the driving force generated in the one wheel of the front wheel and the rear wheel in the moving direction.

3. The control method for an electric four-wheel drive vehicle according to claim 1 or 2, the control method further comprising:
driving the other of the front wheel and the rear wheel with a driving force larger than the basic driving force.

4. The control method for an electric four-wheel drive vehicle according to claim 3, wherein
the other wheel is driven with a driving force larger than the basic driving force by adding at least a part of a reduced driving force of the one wheel to a driving force generated in the other wheel.

5. The control method for an electric four-wheel drive vehicle according to claim 3 or 4, wherein
a total amount of the basic driving force is kept constant by driving the other wheel with a driving force obtained by subtracting a driving force generated in the one wheel for which the upper limit value is set from the total amount of the basic driving force generated in the front wheel and the rear wheel.

6. The control method for an electric four-wheel drive vehicle according to any one of claims 3 to 5, wherein
the basic driving force is calculated based on a rotation speed of the other wheel.

7. The control method for an electric four-wheel drive vehicle according to any one of claims 1 to 6, wherein
the upper limit value is set within a range in which the one wheel grips a road surface.

8. The control method for an electric four-wheel drive vehicle according to any one of claims 1 to 7, wherein
the upper limit value is set in accordance with a vehicle speed.

9. The control method for an electric four-wheel drive vehicle according to any one of claims 1 to 8, wherein
the limit is implemented when an accelerator position is equal to or less than a predetermined threshold value, and
the limit is released when the accelerator position is larger than the threshold value.

10. The control method for an electric four-wheel drive vehicle according to any one of claims 1 to 9, wherein
the limit is released when the one wheel rotates in a direction opposite to the driving direction.

11. A control device for an electric four-wheel drive vehicle including a front drive source for driving a front wheel and a rear drive source for driving a rear wheel independently of the front wheel, wherein
a driving direction of the electric four-wheel drive vehicle is acquired based on an input state of a shift lever,
an actual moving direction of the electric four-wheel drive vehicle is acquired, and
when the driving direction and the moving direction are different from each other,
a basic driving force for suppressing movement in the moving direction is set for the front wheel and the rear wheel, and
one wheel of the front wheel and the rear wheel is driven with a driving force smaller than the basic driving force by implementing a limit for setting an upper limit value for a driving force generated in the one wheel.
